# EUROPÄISCHE PATENTSCHRIFT

(11) **EP 1 763 919 B1**
(45) Veröffentlichungstag und Bekanntmachung des Hinweises auf die Patenterteilung: **15.08.2012**
(21) Anmeldenummer: 05756876.8
(22) Anmeldetag: 28.06.2005
(51) Int. Cl.: H02K 15/00, H02K 15/06

(54) **KALIBRIERVERFAHREN FÜR EINEN KOMMUTATORLÄUFER EINER ELEKTRISCHEN MASCHINE**
CALIBRATING METHOD FOR A COMMUTATOR ARMATURE OF AN ELECTRICAL MACHINE
PROCEDE DE CALIBRAGE POUR UN INDUIT A COLLECTEUR D'UNE MACHINE ELECTRIQUE

(30) Priorität: 30.06.2004 DE 102004032370
(43) Veröffentlichungstag der Anmeldung: 21.03.2007
(73) Patentinhaber: ROBERT BOSCH GMBH, 70442 Stuttgart (DE)
(72) Erfinder: KRETER, Bernd, 31139 Hildesheim (DE); BUNZEL, Mirko, 31191 Algermissen (DE); BUESSE, Wolfgang, 31177 Harsum (DE)
(86) Internationale Anmeldenummer: PCT/EP2005/053012
(87) Internationale Veröffentlichungsnummer: WO 2006/003136

(56) Entgegenhaltungen:
- EP-A- 1 047 177
- DE-A1- 19 521 669
- US-A- 5 778 512
- US-A1- 2003 030 346

## Beschreibung

Die Erfindung betrifft ein Kalibrierverfahren für den Kommutatorläufer der elektrischen Maschine nach dem Oberbegriff des Anspruchs 1.

### Stand der Technik

Elektrischen Maschinen haben in der Regel mindestens einen Grundkörper aus einem lamellierten, weichmagnetischen Blechpaket, der eine Wicklung trägt. Der Grundkörper ist dabei Teil eines Stators beziehungsweise Ständers und/oder Teil eines Läufers beziehungsweise Ankers, wobei die Leiter der Wicklung in Nuten des Blechpaktes isoliert eingesetzt und miteinander verschaltet sind. Stator und Läufer wirken dabei über einen sogenannten Arbeitsluftspalt elektromagnetisch zusammen. Zur Vermeidung von Schwingungsgeräuschen der Wicklung sowie von Leiterbewegungen durch Zentrifugalkräfte an hochdrehenden Läufern ist es erforderlich, die Leiter in den Nuten möglichst zuverlässig zu fixieren.

Zu diesem Zweck ist es allgemein bekannt, die Leiter in den Nuten durch ein Imprägnierharz zu fixieren. Dieses Verfahren ist jedoch nicht nur umweltbelastend, sondern erfordert auch erhebliche Anlageinvestitionen sowie Folgeprozessschritte zum Entfernen des Imprägnierharzes an verschiedenen Bereichen der Maschine, wie zum Beispiel am Kommutator, an den Lagerstellen und am Außenumfang des Läufers.

Zur Vermeidung dieser Nachteile ist es aus der DE 100 49 699 A1 bekannt, die Leiter in den Nuten eines Läuferblechpaketes von elektrischen Maschinen durch Verformungen des die Nutschlitze beidseitig begrenzenden Materials auf den Nutgrund zu drücken und so in ihrer Lage zu fixieren. Hierbei wird das die Nutschlitze beidseitig begrenzende Material der zwischen benachbarten Nutschlitzen ausgebildeten Zahnköpfe an allen Nutschlitzen gleichmäßig stark verformt, so dass der Kommutatorläufer anschließend in einem weiteren Arbeitsgang durch Abdrehen der äußeren Oberfläche des Läuferblechpaketes derart zentrisch zur Mittelachse der Läuferwelle kalibriert wird, dass ein guter Rundlauf mit gleich großem Arbeitsluftspalt über den gesamten Umfang des Läufers erzielt wird.

Mit der vorliegenden Lösung wird angestrebt, die Fixierung der Leiter in den Nuten des Läufers derart zu gestalten, dass damit ein zusätzlicher Arbeitsgang für die Läufer-Kalibrierung entfallen kann, der in der Regel in einem Abdrehen des Lamellenpaketes besteht.

Vorteile der Erfindung Verfahren gemäß dem Präambel des Anspruchs 1 sind aus US5778512 und EP1047177 bekannt.

Eine bevorzugte Anwendung der Erfindung ergibt sich bei elektrischen Maschinen, deren Grundkörper ein auf der Maschinenwelle angeordnetes, trommelförmiges Läufer-Blechpaket ist. Um dort beim Verformen der Zahnköpfe ein Auffächern der Bleche an den beiden Stirnseiten des Blechpakets zu vermeiden, wird in vorteilhafter Weise vor dem Verformen des die Nutschlitze beidseitig begrenzenden Materials der Zahnköpfe des Blechpaketes von seinen beiden Stirnseiten her durch ein Spannwerkzeug axial festgespannt. Durch die in den Unteransprüchen aufgeführten Maßnahmen ergeben sich vorteilhafte Ausgestaltungen und Weiterbildungen der in den Hauptansprüchen angegebenen Merkmale.

Da das Material des als Blechpaket ausgebildeten Grundkörpers eine bestimmte Verformungselastizität aufweist, wird in zweckmäßiger Weise vorgeschlagen, dass die Stirnfläche des Kalibrierstempels von außen in Radialrichtung bis auf den Umfang des Soll-Durchmessers des Grundkörpers zuzüglich eines Material bedingten elastischen Rückfederweges bewegt wird. Damit ist sichergestellt, dass alle radial außenliegenden Flächen des die Nutschlitze begrenzenden Materials der Zahnköpfe auf die Wellenachse des Kommutatorläufers zentriert werden, zu ihr einen gleich großen Abstand haben und damit nach dem elastischen Auffedern beim Zurückbewegen des Kalibrierstempels auf den Umfang des Soll-Durchmessers des Grundkörpers verformt sind.

In einfachster Weise wird dabei die Kalibrierung mit nur einem Kalibrierstempel durchgeführt, indem durch schrittweises Drehen des Kommutatorläufers die Nutschlitze nacheinander von dem einen Kalibrierstempel durch das Material der benachbarten Zahnköpfe zumindest teilweise geschlossen werden. Eine verbesserte Ausführung ergibt sich dadurch, dass durch schrittweises Drehen des Kommutatorläufers die Nutschlitze von zwei einander diametral gegenüberliegenden Kalibrierstempeln gleichzeitig durch das Material der benachbarten Zahnköpfe zumindest teilweise geschlossen werden.

Beste Ergebnisse bezüglich Kalibrierung und Rundlauf erhält man jedoch dadurch, dass alle Nutschlitze gleichzeitig durch eine entsprechende Anzahl von sternförmig angeordneten Kalibrierstempeln durch Verformen des benachbarten Materials der Zahnköpfe zumindest teilweise geschlossen werden. Dabei wird in einer bevorzugten Ausführungsform der Erfindung dafür gesorgt, dass alle gleichzeitig von außen in Radialrichtung nach innen zugestellten Kalibrierstempel in der Endphase der Umformung des Materials der Zahnköpfe an den Nutschlitzen spielfrei aneinander zur Anlage kommen.

In einfachster Weise werden beim Kalibrieren des Läufers die elektrischen Leiter in den Nuten durch den beziehungsweise durch die Kalibrierstempel lediglich bis auf den Nutgrund gedrückt und durch Verformen des Materials der Zahnköpfe zu beiden Seiten der Nutschlitze in den Nuten fixiert. Das zu verformende Material bildet dabei zunächst an den Zahnköpfen radial nach außen vorstehende Lappen, so dass die elektrischen Leiter in die Nuten des Blechpaketes mit ihren auf diese Weise erweiterten Nutschlitzen leichter eingesetzt werden können. Beim Kalibrieren werden dann diese Lappen vom Kalibrierstempel mehr oder weniger stark radial nach innen gedrückt. Am Außenumfang des Läufers ergeben sich dadurch an den Zahnköpfen über den Umfang gesehen mehr oder weniger breite Verformungsmarken.

In Weiterbildung der Erfindung ist es auch möglich, die Nutschlitze mit einem mehrstufigen Kalibrierstempel teilweise zu verschließen, wobei in einem ersten Schritt ein Prägestempel in den offen Nutschlitz eingesetzt und der mindestens eine Leiter auf ganzer Nutlänge der Form der Nut entsprechend verformt wird und danach in einem zweiten Schritt mit einem Verstemm-Stempel das den Nutschlitzen benachbarte Material der Zahnköpfe verformt wird. In einfachster Weise ist dabei der Prägestempel als Vorsprung an der Stirnseite des Kalibrierstempels ausgebildet. Alternativ kann jedoch der Prägestempel auch innerhalb des Kalibrierstempels unabhängig axial verschiebbar ausgeführt sein, so daas beim Nutverstemmen der Prägestempel zuvor aus dem Nutschlitz zurückbewegt wird.

### Zeichnung

Die Erfindung wird im Folgenden beispielhaft anhand der Figuren näher erläutert. Es zeigen:
Figur 1 einen Kommutatorläufer einer elektrischen Maschine mit genutetem Blechpaket beim Kalibrieren, teilweise im Längsschnitt,
Figur 2 einen Ausbruch des Blechpakets im Querschnitt mit Nuten, elektrischen Leitern und Zahnköpfen vor dem Kalibriervorgang,
Figur 3 zeigt den gleichen Ausbruch des Blechpakets beim Kalibrieren mit einem Kalibrierstempel als erstes Ausführungsbeispiel,
Figur 4 zeigt das Blechpaket im Querschnitt mit zwei einander gegenüberliegenden Kalibrierstempeln als zweites Ausführungsbeispiel und
Figur 5 zeigt das Blechpaket im Querschnitt mit ringsum angeordneten Kalibrierstempeln als drittes Ausführungsbeispiel.
Figur 6 zeigt als weiteres Ausführungsbeispiel einen Ausbruch des Blechpaketes im Querschnitt mit einem zweistufigen Kalibrierstempel vor dem Kalibriervorgang,
Figur 7 zeigt den gleichen Ausbruch mit dem Zweistufen-Kalibrierstempel beim Kalibriervorgang und
Figur 8 zeigt einen Ausschnitt der Blechpaket-Oberfläche mit den verformten Zahnköpfen.

### Beschreibung des Ausführungsbeispiele

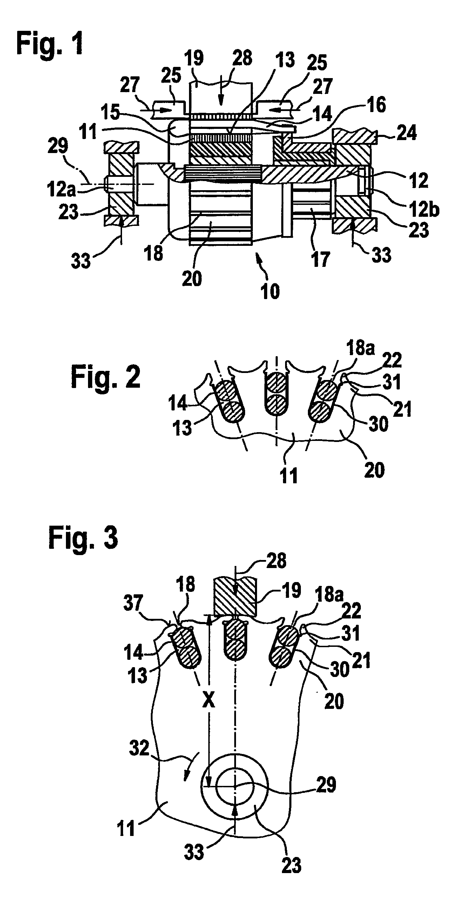

In Figur 1 ist ein mit 10 bezeichneter Kommutatorläufer einer elektrischen Maschine teilweise im Längsschnitt dargestellt, der im vorliegenden Beispiel als Läufer eines Startermotors für Brennkraftmaschinen in Fahrzeugen dient. Der Läufer 10 hat ein aus Blechlamellen gepresstes, trommelförmiges Blechpaket 11, welches als Grundkörper auf eine Läuferwelle 12 aufgepresst ist. Das Blechpaket 11 hat an seinem Außenumfang gleichmäßig verteilt angeordnete Nuten 13 mit länglichem Querschnitt, die axial zur Läuferwelle 12 verlaufen. Der Läufer 10 wirkt über einen Arbeitsluftspalt mit einem nicht dargestellten, das Blechpaket 11 ringförmig umgebenden Stator der elektrischen Maschine zusammen. In den Nuten 13 sind elektrische Leiter 14 einer Läuferwicklung 15 eingesetzt, die aus haarnadelförmig gebogenen Wicklungselementen besteht und deren freie Enden an den Anschlussfahnen 16 eines Trommelkommutators 17 angeschlossen sind. Die Nuten 13 sind jeweils zum Außenumfang des Blechpaketes 11 und somit zum Arbeitsluftspalt hin auf ihrer axialen Länge mit einem Nutschlitz 18 versehen.

Mit Hilfe der Figur 1 wird nunmehr in Verbindung mit Figur 2 und 3 das Kalibrieren des Kommutatorläufers 10 näher erläutert. Dabei zeigt Figur 2 einen vergrößert dargestellten Ausbruch des Blechpaketes 11 im Querschnitt vor dem Fixieren der Leiter 14 in den Nuten 13 und Figur 3 zeigt den gleichen Ausbruch des Blechpaketes 11 beim Fixieren der Leiter 14 durch Verformung des die Nutschlitze 18 beidseitig begrenzenden Materials des Blechpaketes 11 mittels eines Kalibrierstempels 19. Am Blechpaket 11 sind zwischen den benachbarten Nuten 13 jeweils Zähne 20 angeordnet, deren äußeres Ende als Zahnkopf 21 ausgebildet ist. Die Zahnköpfe 21 haben in ihrer ursprünglichen Form gemäß Figur 2 beidseitig radial nach außen hochgestellte Lappen 22, welche die in ihrer ursprünglichen Form gemäß Figur 2 erweiterten Nutschlitze 18a beidseitig begrenzen.

Zum Kalibrieren des Kommutatorläufers 10 werden nun zunächst an den freien Endabschnitten 12a, 12b der Läuferwelle 12 Stützringe 23 aufgesetzt, die in nicht dargestellter Weise von einer Kalibriervorrichtung 24 gehalten werden und somit die Läuferwelle 12 fixieren. Desweiteren wird nun das Blechpaket 11 von seinen beiden Stirnseiten her durch je ein Spannwerkzeug 25 aufgenommen, das sich in Richtung der Pfeile 27 axial bewegt und dabei das Blechpaket 11 axial festspannt. Dadurch wird sichergestellt, dass sich beim Kalibrieren des Blechpaketes deren äußere Blechlamellen nicht aufspreizen. In einem weiteren Schritt wird nun gemäß Figur 3 das die Nutschlitze 18 beidseitig begrenzende Material der Zahnköpfe 21 durch die Stirnfläche 19a des Kalibrierstempels 19 soweit von außen in Radialrichtung des Pfeiles 28 verformt, bis die Stempel-Stirnfläche 19a einen vorgegebenen Abstand X zur Mittelachse 29 der Läuferwelle 12 erreicht hat. Der Abstand X entspricht dabei nicht ganz dem halben Soll-Durchmesser des Blechpaketes 11, da aufgrund der materialbedingten Elastizität des Blechpaketes 11 beim Verformen die Stirnfläche 19a des Kalibrierstempels 19 in Radialrichtung von außen bis auf den Umfang des Läufer-Soll-Durchmessers zuzüglich eines elastischen Federweges bewegt wird. Mit dem Verformen der Zahnköpfe 21 werden gleichzeitig die lackisolierten, zunächst lose mit einer Nutisolation 30 in die Nuten 13 eingesetzten Leiter 14 von den Lappen 22 der Zahnköpfe 21 erfasst, zum Nutgrund hin gedrückt und schließlich in den Nuten 13 fixiert. Dabei wird der Nutschlitz 18 teilweise geschlossen. Um das elastische Auffedern des die Nutschlitz 18 beidseitig begrenzenden Materials der Lappen 22 beim Zurückbewegen des Kalibrierstempels 19 möglichst gering zu halten und um ferner sicher zu stellen, dass bei dieser Verformung die Lappen 22 der Zahnköpfe 21 zum Fixieren der Leiter 14 zur Nut hin gedrückt werden, ist an den Zähnen 20 unterhalb der Lappen 22 jeweils eine Einschnürung 31 ausgebildet, die ein gezieltes Umlegen der Lappen 22 auf den jeweils oberen Leiter 14 erleichtert.

Das Kalibrieren eines Kommutatorläufers 10 mittels Kalibrierstempel 19 kann auf verschiedene Weise erfolgen. Nach dem ersten Ausführungsbeispiel ist gemäß Figur 3 nur ein einziger Kalibrierstempel 19 vorgesehen, mit dem durch ein schrittweises Drehen des Kommutatorläufers 10 in Richtung des Pfeiles 32 die Nutschlitze 18 nacheinander von dem einen Kalibrierstempel 19 durch das Material der Lappen 22 der benachbarten Zahnköpfe 21 teilweise geschlossen werden. Die Verformkräfte des Kalibrierstempels 19 werden dabei von den Stützringen 23 aufgenommen, in die die Endabschnitte der Läuferwelle 12 eingesetzt sind. Die Stützkraft ist dabei in Figur 3 durch den Pfeil 33 dargestellt. Damit ist zugleich sichergestellt, dass das Blechpaket 11 zur Mittelachse der Läuferwelle 12 kalibriert wird.

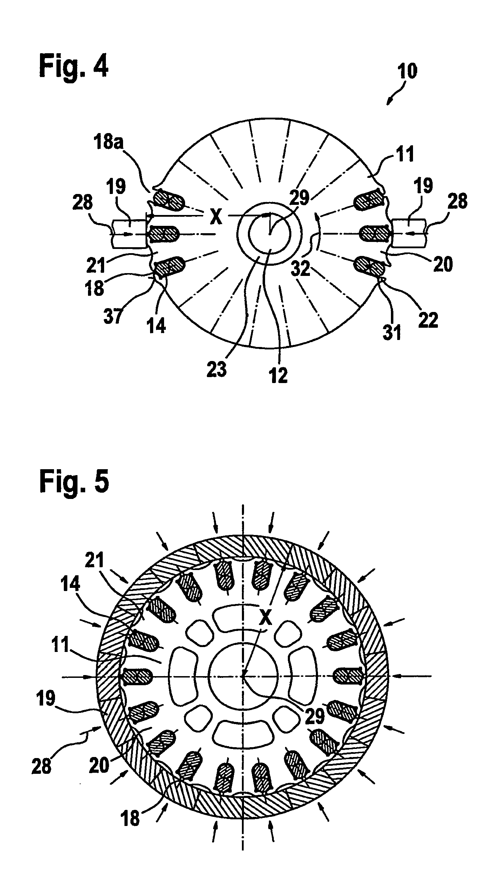

Figur 4 zeigt in einem zweiten Ausführungsbeispiel den Querschnitt durch den Kommutatorläufer 10, wobei dort in einer nicht näher dargestellten Kalibriervorrichtung zwei einander diametral gegenüberliegende Kalibrierstempel 19 vorgesehen sind. Das Blechpaket 11 befindet sich hier zwischen den zwei Kalibrierstempeln 19 und ist ebenfalls an den Endabschnitten der Läuferwelle 12 über die Stützringe 23 bezüglich der Mittelachse 29 der Läuferwelle 12 fixiert. Dort werden die Nutschlitze 18 durch schrittweises Drehen des Kommutatorläufers 10 mit den einander gegenüberliegenden Kalibrierstempeln 19 durch das Verformen des Materials der benachbarten Zahnköpfe 21 teilweise geschlossen. Auch hier wird jeder Kalibrierstempel 19 auf den vorgegebenen Abstand X der Stempel-Stirnfläche 19a zur Mittelachse 29 der Läuferwelle 12 in Richtung des Pfeiles 28 radial nach innen gedrückt.

Figur 5 zeigt in einem dritten Ausführungsbeispiel den Querschnitt durch das Blechpaket 11, bei dem das Kalibrieren des Kommutatorläufers 10 sowie das Fixieren der elektrischen Leiter 14 in ihren Nuten 13 gleichzeitig über den ganzen Umfang des Kommutatorläufers 10 erfolgt, indem dort alle Nutschlitze 18 gleichzeitig durch eine entsprechende Anzahl von sternförmig angeordneten Kalibrierstempeln 19 durch Verformen des Materials der benachbarten Zahnköpfe 21 teilweise geschlossen werden. Dabei ist erkennbar, dass in der Endphase der Umformung des Materials der Zahnköpfe 21 an den Nutschlitzen 18 alle von außen in Radialrichtung nach innen zugestellten Kalibrierstempel 19 spielfrei aneinander zur Anlage kommen. Dadurch wird mit der Kalibrierung bezogen auf die Mittelachse 29 der Läuferwelle 12 ein hochgenauer Rundlauf des Kommutatorläufers 10 erreicht.

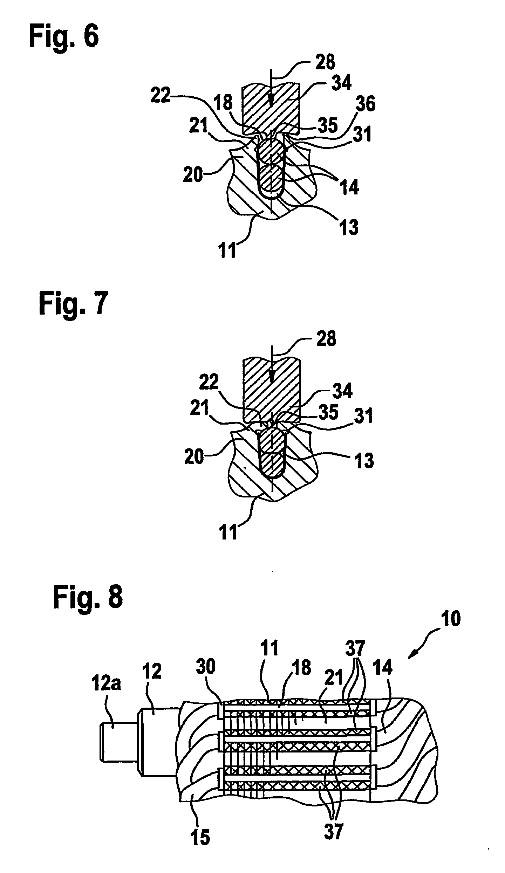

Die Figuren 6 und 7 zeigen als weiteres Ausführungsbeispiel einen Ausbruch des Blechpaketes 11 im Querschnitt und in vergrößerter Darstellung, bei dem ein gegenüber den bisherigen Ausführungen abgewandelter Kalibrierstempel 34 verwendet wird, der mehrstufig arbeitet. Der Kalibrierstempel 34 hat an seiner vorderen Stirnfläche einen über die gesamte Länge des Blechpaketes 11 vorspringenden Kopf 35, der als Prägestempel dient. Beidseitig dazu zurückgesetzt hat der Kalibrierstempel 34 Schultern 36, die als Verstemm-Stempel für die Nutschlitze 18 dienen. Zum Kalibrieren des Kommutatorläufers 10 wird der Kalibrierstempel 34 in Richtung des Pfeiles 28 von außen in Radialrichtung auf den darunter liegenden Nutschlitz 18 des Blechpaketes 11 bewegt. Dabei ragt gemäß Figur 6 der Kopf 35 in den Nutschlitz 18.

In einem ersten Schritt werden nun die Leiter 14 auf ganzer Nutlänge vom Kopf 35 in eine dem Nutquerschnitt sich anpassende Form geprägt. Bei der weiteren Stempelbewegung in Radialrichtung werden sodann gemäß Figur 7 in einem zweiten Schritt mit den beidseitigen Schultern 36 die Lappen 22 der Zahnköpfe 21 zu beiden Seiten des Nutschlitzes 18 erfasst und gegen den oberen Leiter 14 gedrückt. Dabei wird der Nutschlitz 18 teilweise geschlossen und die Leiter 14 werden in der Nut 13 fixiert. Auch hier wird der Kalibrierstempel 34 zum Kalibrieren des Kommutatorläufers 10 exakt bis auf den vorgegebenen Abstand der die Stirnfläche des Stempels bildenden Schultern 36 zur Mittelachse der Läuferwelle zugestellt, so dass beim Zurückfahren des Stempels die außenliegenden Flächen der Lappen 22 über die ganze Länge des Blechpaketes 11 auf dem Umfang des Soll-Durchmessers vom Kommutatorläufer 10 liegen. Mit dem Verprägen der Leiter 14 in einem mehrstufigen Arbeitsgang zum Kalibrieren des Kommutatorläufers 10 wird ein höherer Nutfüllfaktor erreicht und damit das sogenannte Leistungsgewicht der elektrischen Maschine verbessert.

In Abwandlung des Kalibrierstempels 34 nach Figur 6 und 7 ist es ebenso möglich, anstelle des Kopfes 35 einen unabhängig vom Kalibrierstempel arbeitenden Prägestempel zu verwenden, der im Kalibrierstempel 35 geführt wird und zunächst die Leiter 14 in der Nut 13 verprägt. Danach kann dann der Prägestempel zurückgezogen werden und mit dem anschließenden Verformen der Lappen 22 durch die Schultern 36 des Kalibrierstempels 34 können gegebenenfalls die Nutschlitze 18 nahezu vollständig geschlossen werden.

Da das Lamellen-Blechpaket 11 auf den mittleren Abschnitt der Läuferwelle 12 aufgepresst wird, ergeben sich üblicherweise axiale Toleranzen zwischen Läuferwelle und Blechpaket, so dass sich auch über die axiale Länge des Blechpaketes leichte Versetzungen der Blechlamellen zueinander ergeben. Mit der erfindungsgemäßen Verformung des Materials der Zahnköpfe 21 zu beiden Seiten der Nutschlitze 18 können nunmehr die Form- und Lagetoleranzen der Blechlamellen bezogen auf die Lagerstellen der Läuferwelle eliminiert und damit ein hochgenauer Rundlauf mit gegebenenfalls geringen Unwuchten erzielt werden.

Figur 8 zeigt in einem Ausschnitt die Oberfläche des Blechpaketes 11 mit mehreren verformten Zahnköpfen 21, mit denen die Nutschlitze 18 beim Kalibrieren teilweise verschlossen wurden. Dabei ist erkennbar, dass die beim Kalibrieren durch die Kalibrierstempel 19 beziehungsweise 34 entstandenen Verformmarken 37 der Nutköpfe 21 zu beiden Seiten Nutschlitze 18 sowohl über die axiale Länge des Blechpaketes 11 als auch und insbesondere über dessen Umfang unterschiedlich breit ausgebildet sind. Diese Verformmarken 37 bilden radial außenliegende Flächen der Lappen 22 an den Zahnköpfen 21, die bis auf den Soll-Durchmesser des Blechpaketes 11 verformt sind.

## Patentansprüche

1. Verfahren zum Kalibrieren eines Kommutatorläufers (10) einer elektrischen Maschine, auf dessen Läuferwelle (12) ein Grundkörper aus weichmagnetischem Material, ein Blechpaket (11), befestigt ist, an dessen einen Arbeitsluftspalt der Maschine begrenzenden Umfang abwechselnd axial verlaufende Nuten (13) und Zähne (20) angeordnet sind, wobei die Nuten zur Aufnahme elektrische Leiter (14) jeweils zum Arbeitsluftspalt hin einen Nutschlitz (18) aufweisen, der beidseitig durch Material des Grundkörpers, vorzugsweise eines Zahnkopfes (21) der benachbarten Zähne, begrenzt ist, welches zunächst radial nach außen über den Umfang des Grundkörpers vorsteht und nach dem Einsetzen der Leiter in die Nuten durch einen Stempel (19) auf ganzer Nutlänge von außen in Radialrichtung zumindest soweit verformt wird, dass damit die Leiter in den Nuten fixiert und die Nutschlitze zumindest tellweise verschlossen werden, wobei der Kommutatorläufer (10) an den freien Endabschnitten (12a, 12b) der Läuferwelle (12) fixiert wird, dass so dann das die Nutschlitze (18) beidseitig begrenzende, zunächst am Umfang vorstehende Material jeweils durch die Stirnfläche des als Kalibrierstempel (19: 34) verwendeten Stempels soweit von außen in Radialrichtung verformt wird, bis die Stempel-Stirnfläche (19a; 36) einen vorgegebenen Abstand (X) zur Mittelachse (29) der Läuferwelle (12) erreicht hat, **dadurch gekennzeichnet, dass** vor dem Verformen des die Nutschlitze (18) beidseitig begrenzenden Materials der aus einem Blechpaket (11) bestehende Grundkörper von seinen beiden Stirnseiten her durch ein Spannwerkzeug (25) axial festgespannt wird.

2. Verfahren nach Anspruch 1, **dadurch gekennzeichnet, dass** die Stirnfläche (19a; 36) des Kalibrierstempels (19; 34) von außen in Radialrichtung bis auf den Umfang eines Soll-Durchmessers des Grundkörpers zuzüglich eines materialbedingten elastischen Rückfederweges bewegt wird.

3. Verfahren nach einem der vorherigen Ansprüche, **dadurch gekennzeichnet, dass** durch schrittweises Drehen des Kommutatorläufers (10) die Nutschlitze (18) nacheinander von einem Kalibrierstempel (19) durch das Material der benachbarten Zahnköpfe (21) zumindest teilweise geschlossen werden.

4. Verfahren nach einem der Ansprüche 1 bis 2, **dadurch gekennzeichnet, dass** durch schrittweises Drehen des Kommutatorläufers (10) die Nutschlitze (18) von zwei einander diametral gegenüberliegenden Kalibrierstempeln (19) durch das Material der benachbarten Zahnköpfe (21) zumindest teilweise geschlossen werden.

5. Verfahren nach einem der Ansprüche 1 bis 2, **dadurch gekennzeichnet, dass** alle Nutschlitze (18) gleichzeitig durch eine entsprechende Anzahl von sternförmig angeordneten Kalibrierstempel (19) durch Verformen der benachbarten Zahnköpfe (21) zumindest teilweise geschlossen werden.

6. Verfahren nach Anspruch 5, **dadurch gekennzeichnet, dass** alle gleichzeitig von außen in Radialrichtung nach innen zugestellten Kalibrierstempel (19) in der Endphase der Umformung des Materials der Zahnköpfe (21) an den Nutschlitzen (18) spielfrei aneinander zur Anlage kommen.

7. Verfahren nach einem der Ansprüche 1 bis 6, **dadurch gekennzeichnet, dass** die Nutschlitze (18) mit einem mehrstufig arbeitenden Kalibrierstempel (34) teilweise verschlossen werden, wobei in einem ersten Schritt ein Prägestempel (35) in den erweiterten Nutschlitz (18a) eingesetzt und der mindestens eine Leiter (14) auf ganzer Nutlänge der Form des Nutquerschnittes entsprechend verformt wird und dass danach in einem zweiten Schritt mit einem Verstemmstempel (36) das Material der dem Nutschlitz (18) benachbarten Zahnköpfe (21) verformt wird.

## Claims

1. Method for calibrating a commutator rotor (10) of an electrical machine, a base body which is composed of soft-magnetic material, a laminated core (11), being mounted on the rotor shaft (12) of the said commutator rotor, and alternately axially running slots (13) and teeth (20) being arranged on the periphery of the said base body, the said periphery delimiting a working air gap of the machine, with the slots having a slot slit (18) in each case in the direction of the working air gap in order to accommodate electrical conductors (14), the said slot slit being delimited on both sides by material of the base body, preferably a tooth head (21) of the adjacent teeth, which material initially projects radially outwards beyond the periphery of the base body and, after the conductors are inserted into the slots, is deformed by a punch (19) from the outside in the radial direction over the entire slot length at least to the extent that, as a result, the conductors are fixed in the slots and the slot slits are at least partially closed, with the commutator rotor (10) being fixed to the free end sections (12a, 12b) of the rotor shaft (12) such that the material which delimits the slot slits (18) on both sides and initially projects at the periphery is deformed in each case by the end face of the punch, which is used as a calibrating punch (19; 34), from the outside in the radial direction until the punch end face (19a; 36) has reached a prespecified distance (X) from the centre axis (29) of the rotor shaft (12), **characterized in that**, before the deformation of the material which delimits the slot slits (18) on both sides, the base body which comprises a laminated core (11) is axially firmly clamped from both of its end faces by a clamping tool (25).

2. Method according to Claim 1, **characterized in that** the end face (19a; 36) of the calibrating punch (19; 34) is moved from the outside in the radial direction as far as the periphery of a setpoint diameter of the base body plus a material-related elastic spring-back distance.

3. Method according to either of the preceding claims, **characterized in that** the slot slits (18) are at least partially closed in succession by the material of the adjacent tooth heads (21) by means of a calibrating punch (19) by virtue of rotation of the commutator rotor (10) in steps.

4. Method according to either of Claims 1 and 2, **characterized in that** the slot slits (18) are at least partially closed by the material of the adjacent tooth heads (21) by means of two calibrating punches (19), which are situated diametrically opposite one another, by virtue of rotation of the commutator rotor (10) in steps.

5. Method according to either of Claims 1 and 2, **characterized in that** all of the slot slits (18) are at least partially closed at the same time by deformation of the adjacent tooth heads (21) by means of a corresponding number of calibrating punches (19) which are arranged in the form of a star.

6. Method according to Claim 5, **characterized in that** all the calibrating punches (19) which are moved inwards from the outside in the radial direction at the same time come to rest against one another without play in the end phase of the reshaping of the material of the tooth heads (21) at the slot slits (18).

7. Method according to one of Claims 1 to 6, **characterized in that** the slot slits (18) are partially closed by a calibrating punch (34) which operates in multiple stages, with an embossing punch (35) being inserted into the expanded slot slit (18a) and the at least one conductor (14) being deformed over the entire slot length in accordance with the shape of the slot cross section in a first step, and **in that** the material of the tooth heads (21) which are adjacent to the slot slit (18) is then deformed by a caulking punch (36) in a second step.

## Revendications

1. Procédé de calibrage d'un rotor de commutateur (10) d'un moteur électrique sur l'arbre de rotor (12) duquel est fixé un corps de base en matériau faiblement magnétique, un paquet de tôle (11), des rainures (13) et des dents (20) s'étendant dans le plan axial étant disposées en alternance au niveau de la périphérie dudit corps délimitant une fente d'air de travail du moteur, les rainures comportant, pour recevoir des conducteurs électriques (14), respectivement en direction de la fente d'air de travail, une fente de rainure (18) délimitée des deux côtés par la matière du corps de base, de préférence d'une tête de dent (21) des dents voisines, ladite matière ressortant d'abord dans le plan radial vers l'extérieur au-delà de la périphérie du corps de base puis étant déformée, après insertion des conducteurs dans les rainures par le biais d'un poinçon (19), sur l'ensemble de la longueur de la rainure de l'extérieur dans la direction radiale au moins jusqu'à ce qu'ainsi les conducteurs soient fixés dans les rainures et que les fentes de rainure soient au moins en partie obturées, le rotor de commutateur (10) étant fixé au niveau des sections d'extrémité (12a, 12b) libres de l'arbre de rotor (12), de telle sorte que la matière ressortant d'abord au niveau de la périphérie puis délimitant les fentes de rainure (18) des deux côtés soit respectivement déformée depuis l'extérieur dans la direction radiale par la surface avant du poinçon servant de poinçon de calibrage (19 ; 34) jusqu'à ce que la surface avant du poinçon (19a ; 36) ait atteint une distance (X) prédéfinie par rapport à l'axe central (29) de l'arbre de rotor (12), **caractérisé en ce qu'**avant la déformation de la matière délimitant des deux côtés les fentes de rainure (18), le corps de base composé d'un paquet de tôle (11) est serré dans le plan axial en direction de ses deux côtés avant par le biais d'un outil de serrage (25) jusqu'à être fermement fixé.

2. Procédé selon la revendication 1, **caractérisé en ce que** la surface avant (19a ; 36) du poinçon de calibrage (19 ; 34) est déplacée de l'extérieur dans la direction radiale jusqu'à la périphérie d'un diamètre théorique du corps de base défini par rapport à la trajectoire d'un ressort de rappel élastique, ladite trajectoire étant fonction de la matière utilisée.

3. Procédé selon l'une quelconque des revendications précédentes, **caractérisé en ce que** le pivotement par étapes du rotor de commutateur (10) permet de fermer au moins en partie les fentes de rainure (18) les unes après les autres au moyen d'un poinçon de calibrage (19) grâce à la matière des têtes de dent (21) voisines.

4. Procédé selon l'une quelconque des revendications 1 à 2, **caractérisé en ce que** le pivotement par étapes du rotor de commutateur (10) permet de fermer au moins en partie les fentes de rainure (18) à l'aide de deux poinçons de calibrage (19) diamétralement opposés en utilisant la matière des têtes de dent (21) voisines.

5. Procédé selon l'une quelconque des revendications 1 à 2, **caractérisé en ce que** toutes les fentes de rainure (18) sont fermées au moins en partie simultanément par un nombre correspondant de poinçons de calibrage (19) disposés en étoile par déformation des têtes de dent (21) voisines.

6. Procédé selon la revendication 5, **caractérisé en ce que** tous les poinçons de calibrage (19) déplacés simultanément de l'extérieur vers l'intérieur dans la direction radiale viennent se positionner sans jeu les uns contre les autres contre les fentes de rainure (18) lors de la phase finale de transformation de la matière des têtes de dent (21).

7. Procédé selon l'une quelconque des revendications 1 à 6, **caractérisé en ce que** les fentes de rainure (18) sont en partie fermées à l'aide d'un poinçon de calibrage (34) travaillant en plusieurs étapes, au cours d'une première étape, un poinçon d'estampage (35) étant inséré dans la fente de rainure (18a) élargie et l'au moins un conducteur (14) étant déformé de façon correspondante sur toute la longueur de la rainure de façon à prendre la forme de la section transversale de la rainure puis, au cours d'une deuxième étape, la matière des têtes de dent (21) voisines à la fente de rainure (18) étant déformée à l'aide d'un poinçon de matage (36).
